# DEMANDE DE BREVET EUROPEEN

(11) **EP 4 427 594 A2**
(43) Date de publication de la demande: **11.09.2024**
(21) Numéro de dépôt: 24183796.2
(22) Date de dépôt: 20.09.2019
(51) Int. Cl.: A21B 3/13

(54) **MOULE À PAROI VARIABLE**

(30) Priorité: 25.09.2018 FR 1858758
(62) Demande divisionnaire de: 19769539.8
(71) Demandeur: SEB S.A., 69130 Ecully (FR)
(72) Inventeur: CAREGNATO, Emmanuelle, 74150 Bloye (FR); PLICHON, Stéphane, 74350 Allonzier-la-Caille (FR); SUCHET, Stéphane, 74150 Marcellaz Albanais (FR)
(74) Mandataire: SEB Développement

(57) **Abrégé**

L'invention concerne un moule destiné à la cuisson d'aliments, notamment à la cuisson de pâtisserie, comportant au moins une cavité de réception d'aliments à cuire, cette cavité comportant un bord supérieur raccordé à une paroi supérieure du moule et une paroi de réception d'aliments à cuire qui s'étend depuis le bord supérieur. Conformément à l'invention, la paroi de réception présente une épaisseur (E) sensiblement constante et comporte une ou plusieurs zones présentant une épaisseur (Er) inférieure à l'épaisseur (E), et une surface (Sr), l'épaisseur (Er) étant sensiblement constante sur la surface (Sr).

## Description

### Domaine technique

La présente invention se rapporte au domaine des moules destinés à l'usage alimentaire, et tout particulièrement aux moules destinés à la cuisson de pâtisseries.

### Etat de la technique

Il est connu, du brevet FR2786668 B1, un moule destiné à la cuisson d'aliments, notamment à la cuisson de pâtisserie, comportant une série de cavités de réception d'aliments à cuire, chaque cavité comportant un bord supérieur raccordé à une paroi supérieure du moule et une paroi de réception d'aliments qui s'étend depuis le bord supérieur. Conformément à ce document, le moule est un moule souple fabriqué par moulage à partir des élastomères constitués par des silicones.

Un tel moule a pour avantage de présenter des nervures de rigidification reliant entre eux les cavités de réception permettant d'obtenir une raideur du moule pour en faciliter la manipulation et le stockage par empilement.

Cependant, un tel moule a pour inconvénient de présenter une paroi de réception ne favorisant pas les échanges thermiques entre l'extérieur et l'intérieur de la cavité de réception du moule. En effet, le résultat de cuisson dépend grandement du comportement thermique de la paroi de réception qui est d'un côté exposé à un moyen de chauffe (par exemple la vapeur, le rayonnement, les résistances d'un four, etc.) et d'un autre côté en contact avec les aliments à cuire. En général, la face supérieure des aliments à cuire exposée directement à l'air chaud est beaucoup plus cuite que la partie extérieure des aliments à cuire qui est en contact avec la paroi de réception. Le coeur des aliments après cuisson n'est souvent pas suffisamment cuit voire cru. Ainsi, en utilisant un tel moule, l'utilisateur obtient une cuisson inégale des aliments.

De plus, un tel moule présente l'inconvénient de ne pas permettre d'obtenir un caractère croustillant sur la partie extérieure des aliments après cuisson. Par exemple, lorsque l'utilisateur souhaite obtenir un bon caractère croustillant sur cette partie extérieure de son gâteau qui est en contact avec la paroi de réception pendant la cuisson, en augmentant soit la température de cuisson soit le temps de cuisson, la face supérieure du gâteau exposée à l'air chaud est souvent trop cuite voire brûlée.

Le but de la présente invention est de proposer un moule à pâtisserie remédiant aux inconvénients précités, et notamment de présenter une cuisson homogène des aliments contenus dans la cavité de réception.

Un autre but de la présente invention est de favoriser le brunissement non enzymatique au niveau de la partie extérieure des aliments qui est en contact avec la paroi de réception pendant la cuisson, soit par caramélisation lorsque l'aliment à cuire est riche en sucre, soit par la réaction de Maillard.

Un autre but de l'invention est de proposer un moule qui soit de conception simple, maniable par l'utilisateur et économique à mettre en oeuvre.

A cet effet, l'invention se rapporte à un moule destiné à la cuisson d'aliments, notamment à la cuisson de pâtisserie, comportant au moins une cavité de réception d'aliments à cuire, cette cavité comportant un bord supérieur raccordé à une paroi supérieure du moule et une paroi de réception d'aliments à cuire qui s'étend depuis le bord supérieur, la paroi de réception présentant une épaisseur E sensiblement constante et comportant une ou plusieurs zones présentant une épaisseur Er inférieure à l'épaisseur E et une surface Sr, l'épaisseur Er étant sensiblement constante sur la surface Sr.

Le moule ainsi réalisé présente l'avantage de présenter une cavité de réception munie d'une telle paroi de réception, qui favorise, durant la cuisson, le transfert thermique spontané depuis l'extérieur de la cavité de réception où la température est plus élevée vers l'intérieur de la cavité de réception où la température est plus basse. Le flux thermique au travers de la paroi de réception est augmenté grâce à la diminution de son épaisseur au niveau de la ou des zones présentant une épaisseur Er inférieure à l'épaisseur E. La différence dans le résultat de cuisson entre une face supérieure des aliments et une partie extérieure des aliments qui est contact avec la paroi de réception pendant la cuisson se réduit considérablement. Ainsi, une telle paroi de réception permet de rendre la cuisson des aliments contenus dans la cavité de réception plus homogène.

Le moule selon l'invention présente l'avantage d'obtenir un bon caractère croustillant sur la partie extérieure des aliments qui est en contact avec la paroi de réception pendant la cuisson. Par exemple, un gâteau ayant un bon caractère croustillant sur la partie extérieure est meilleur au goût et présente également un aspect appétissant et séduisant.

De plus, le moule selon l'invention présente l'avantage d'obtenir une bonne cuisson des aliments ayant un caractère croustillant amélioré de la partie extérieure des aliments sans la nécessité d'ajuster le temps et/ou la température de cuisson, et de conserver un coeur moelleux aux aliments après cuisson.

Par un bon caractère croustillant sur une face des aliments, il faut comprendre qu'une partie extérieure des aliments à cuire durcit à la cuisson et est dorée à la fin de cuisson. La partie extérieure croustillante est croquante.

Avantageusement, le moule selon la présente invention permet de réaliser des pains, brioches, cannelés, cakes salés ou sucrés, muffins et autres pâtisseries présentant un bon caractère croustillant.

Selon une autre caractéristique de l'invention, la paroi de réception comporte une face intérieure qui est en contact avec les aliments à cuire et une face extérieure opposée à la face intérieure et exposée à un moyen de chauffe, la ou les zones présentant une épaisseur Er inférieure à l'épaisseur E étant agencées sur la face extérieure de la paroi de réception.

Une telle caractéristique permet de présenter une paroi de réception qui favorise le transfert thermique par conduction depuis l'extérieur de la cavité de réception vers l'intérieur de la cavité de réception, grâce à la diminution d'épaisseur de la paroi de réception au niveau de la ou les zones, sans modifier la forme finale des aliments après cuisson, forme définie par la forme de la cavité de réception du moule.

Selon une autre caractéristique de l'invention, le rapport entre la surface totale de de la ou des zones et la surface de la face extérieure est compris de 0.1 à 0.9, de préférence de 0.3 à 0.8.

La valeur minimale du rapport de surface permet qu'une quantité minimum de chaleur passe au travers de la paroi de réception afin de garantir une bonne cuisson des aliments. La valeur maximale du rapport de surface renforce le bon caractère croustillant de la partie extérieure des aliments qui est en contact avec la paroi de réception pendant la cuisson, tout en conservant une rigidité suffisante du moule.

Selon une autre caractéristique de l'invention, la paroi de réception comporte une paroi latérale et une paroi de fond, la zone présentant une épaisseur Er inférieure à l'épaisseur E se situant dans la paroi de fond.

Une telle caractéristique présente l'avantage de présenter une paroi de fond qui améliore la cuisson et le bon caractère croustillant d'une face inférieure des aliments après cuisson. Une face inférieure des aliments bien cuite et présentant un bon caractère croustillant permet de faciliter le démoulage des aliments après cuisson. De plus, un gâteau ayant une face inférieure bien cuite et croustillante conserve bien la forme donnée par le moule une fois démoulé et ne s'effondre pas.

Selon une autre caractéristique de l'invention, le rapport entre la surface totale de la ou des zones et la surface de la face extérieure de la paroi de fond est compris de 0.1 à 0.8, de préférence de 0.3 à 0.7.

La valeur minimale du rapport de surface permet qu'une quantité minimum de chaleur passe au travers de la paroi de réception, notamment au niveau de la paroi de fond, afin de garantir une bonne cuisson d'une face inférieure des aliments. La valeur maximale du rapport de surface renforce le caractère croustillant de la face inférieure des aliments, tout en conservant une rigidité suffisante du moule.

Selon une autre caractéristique de l'invention, la paroi de réception comporte une pluralité de zones présentant une épaisseur Er inférieure à l'épaisseur E réparties de manière régulière sur la face extérieure, en particulier sur la face extérieure de la paroi de fond.

Selon une autre caractéristique de l'invention, les zones qui présentent une épaisseur Er inférieure à l'épaisseur E sont disposées en étoile sur la paroi de fond, les axes longitudinaux de ces zones formant les rayons d'une étoile convergent vers le ou les centres de la forme géométrique formée par la paroi de fond. Ainsi les axes longitudinaux de ces zones sont disposés sensiblement en rayons. En particulier, ces rayons traçent des lignes droites à partir du centre de la forme géométrique formée par la paroi de fond. Ainsi le moule selon l'invention présente l'avantage d'obtenir une bonne cuisson des aliments ayant un caractère croustillant amélioré de la partie extérieure des aliments sans la nécessité d'ajuster le temps et/ou la température de cuisson, et de conserver un coeur moelleux aux aliments après cuisson.

Selon une autre caractéristique de l'invention, les zones, présentant une épaisseur Er inférieure à l'épaisseur E, sont agencées de manière concentrique en partant du centre géométrique de la paroi de fond.

De telles caractéristiques ont pour avantage de présenter une paroi de réception qui transmet une quantité de chaleur à l'intérieur de la cavité de réception de manière homogène et régulière. Ainsi, le résultat de cuisson des aliments est plus homogène, en particulier au coeur des aliments tout en évitant que des parties crues de l'aliment subsistent.

Avantageusement, en cas de pluralité de zones présentant une épaisseur Er inférieure à l'épaisseur E, celles-ci présentent la même forme et la même épaisseur Er. De préférence, ces zones sont de formes circulaires ou ovales, formant des puits.

Une telle caractéristique a pour avantage de présenter une paroi de réception qui transmet une quantité de chaleur à l'intérieur de la cavité de réception de manière homogène et régulière. Ainsi, le résultat de cuisson des aliments est plus homogène, en particulier au coeur des aliments tout en évitant que des parties crues de l'aliment subsistent.

Selon une autre caractéristique de l'invention, le rapport entre l'épaisseur Er et l'épaisseur E est compris de 0.3 à 0.8, de préférence de 0.5 à 0.8.

La valeur minimale du rapport d'épaisseur permet qu'une quantité minimum de chaleur passe au travers de la paroi de réception afin de garantir une bonne cuisson des aliments. La valeur maximale du rapport d'épaisseur renforce le bon caractère croustillant de la partie extérieure des aliments qui est en contact avec la paroi de réception pendant la cuisson, tout en conservant une rigidité suffisante du moule.

Selon une autre caractéristique de l'invention, les zones, présentant une épaisseur Er inférieure à l'épaisseur E, sont réparties sur la paroi de fond et s'étendent de manière régulière depuis le centre de la paroi de fond vers l'extrémité de la paroi de fond 13d. La taille de ces zones augmente progressivement depuis le centre de la paroi de fond vers l'extrémité de la paroi de fond 13d. Un tel agencement de ces zones sur la paroi de fond permet un transfert de chaleur régulier et uniforme sur toute la surface de la paroi de fond.

Selon une autre caractéristique de l'invention, le moule est flexible.

Selon une variante de l'invention, le moule est à base de silicone.

Ainsi, un tel moule souple, par exemple à base de silicone présente l'avantage d'être flexible, résistant à la chaleur, antiadhérent et facile à nettoyer. Un moule à base de silicone facilite également la mise en oeuvre de la présente invention.

On comprendra mieux les buts, aspects et avantages de la présente invention, d'après la description donnée ci-après de modes particuliers de réalisation de l'invention présentés à titre d'exemple non limitatif, en se référant aux dessins annexés dans lesquels :
- La figure 1 est une vue en perspective d'un moule selon un premier mode particulier de réalisation de l'invention ;
- La figure 2 est une vue de dessus du moule de la figure 1 ;
- La figure 3 est une vue en coupe du moule, selon la ligne de coupe III-III de la figure 2 ;
- La figure 4 est une vue en détail la partie IV illustrée à la figure 3 ;
- La figure 5 est une vue de dessous du moule de la figure 1 ;
- La figure 6 est une vue en détail des zones disposées sur la paroi de fond du moule de la figure 5.
- La figure 7 est une vue de dessous d'un moule selon un deuxième mode particulier de réalisation de l'invention ;
- La figure 8 est une vue en détail des zones disposées sur la paroi de fond du moule de la figure 5 montrant la disposition en rayon des axes longitudinaux;

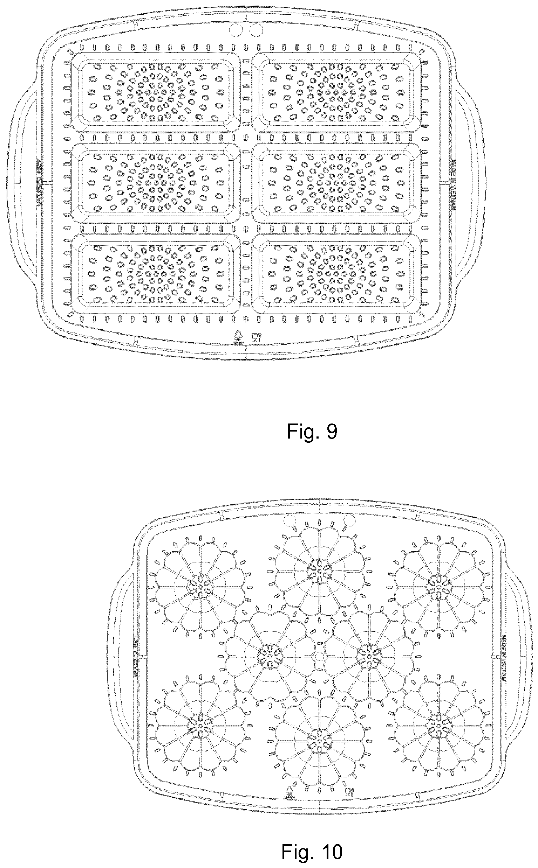

- La figure 9 est une vue de dessous d'un moule selon un troisième mode particulier de réalisation de l'invention ;
- La figure 10 est une vue de dessous d'un moule selon un quatrième mode particulier de réalisation de l'invention ;

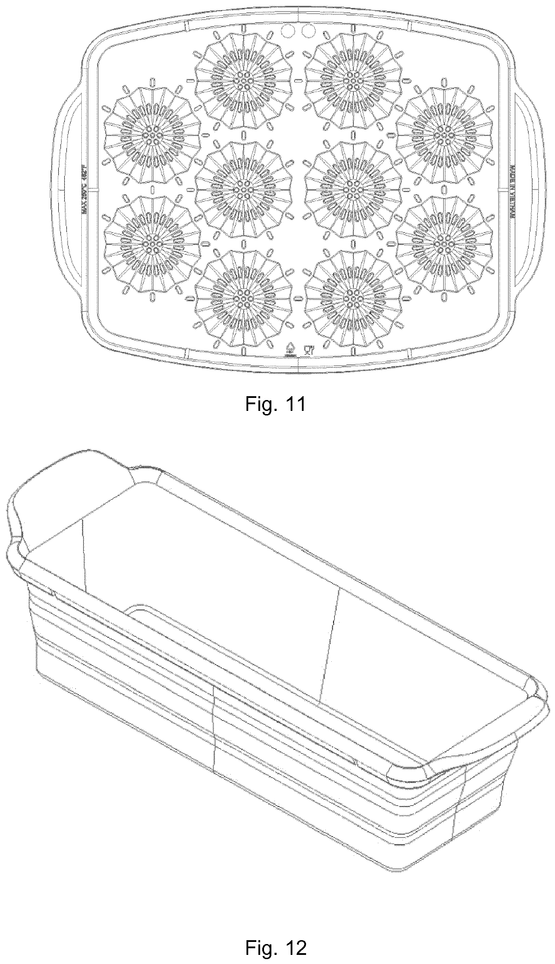

- La figure 11 est une vue de dessous d'un moule selon un cinquième mode particulier de réalisation de l'invention ;

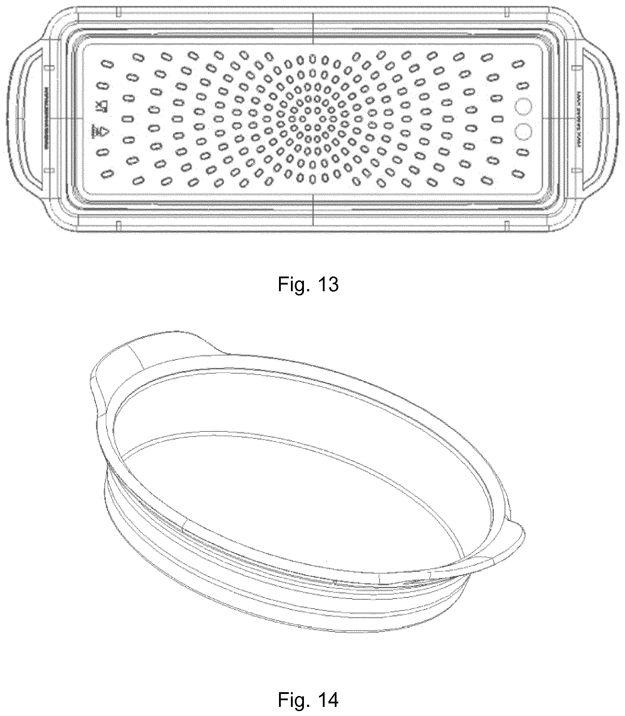

- Les figures 12 et 13 sont des vues en perspective et en vue de dessous respectivement d'un sixième mode particulier de réalisation de l'invention ;

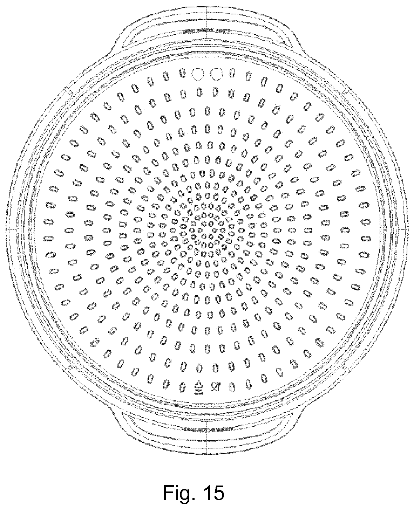

- Les figures 14 et 15 sont des vues en perspective et en vue de dessous respectivement d'un septième mode particulier de réalisation de l'invention.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes "horizontal", "vertical", "inférieur", "supérieur", "avant", "arrière" employés pour décrire le moule font référence à ce moule lorsqu'il repose à plat sur sa cavité de réception.

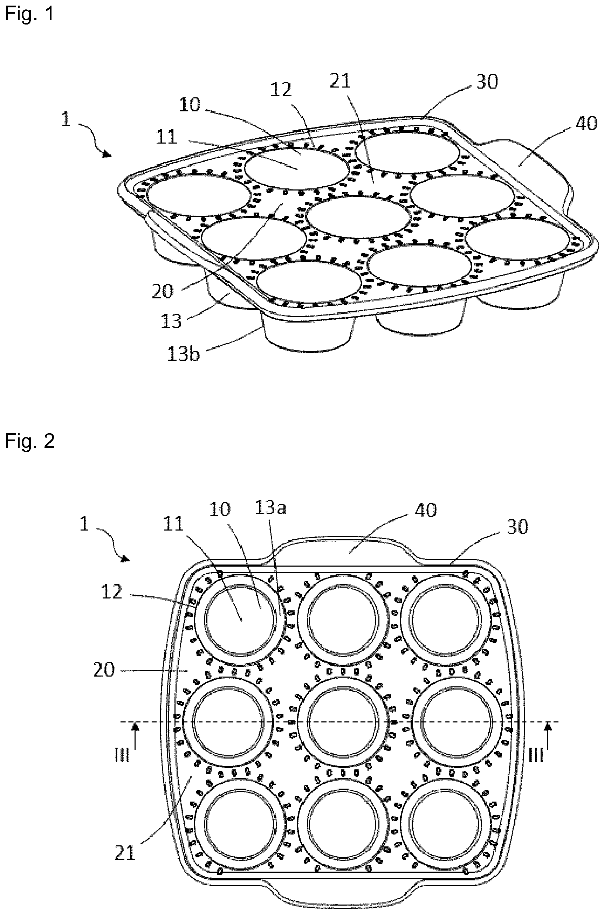

La figure 1 illustre un moule 1 souple qui est destiné à la cuisson de pâtisseries au four (non illustré), pour réaliser des pains, brioches, cakes salés ou sucrés, muffins, etc. Le moule 1 souple comporte une pluralité de cavités de réception 10 de dimensions identiques réparties géographiquement selon des rangées parallèles sur une paroi supérieure 20 du moule 1. Les cavités de réception 10 sont destinées à recevoir des aliments à cuire (préparations alimentaires).

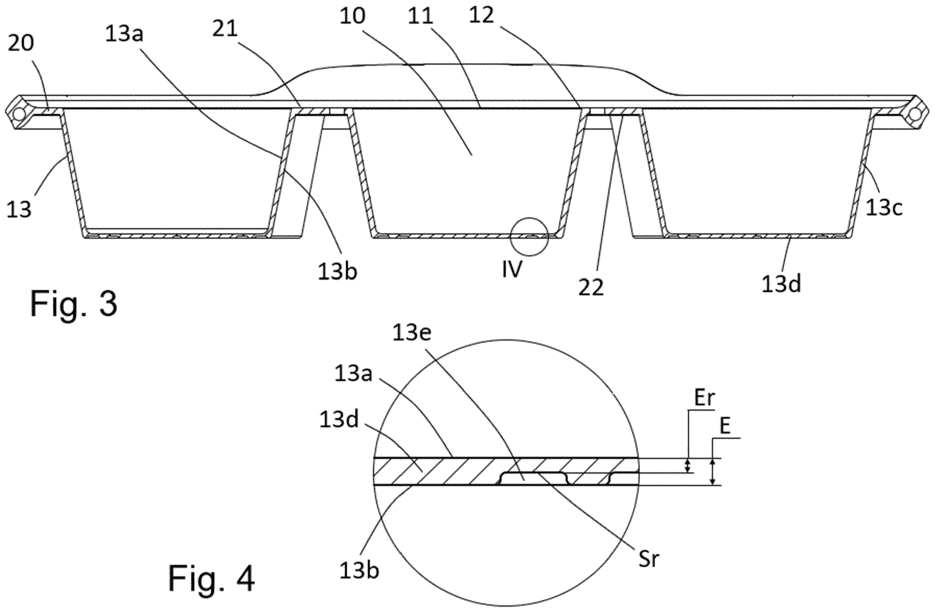

Chaque cavité de réception 10 présente une ouverture 11 au travers de laquelle sont versées les aliments à cuire dans la cavité de réception 10 avant cuisson et d'où sont extraits les aliments cuits (gâteaux ou pâtisseries) après cuisson. L'ouverture 11 de la cavité de réception 10 est délimitée par un bord supérieur 12, qui est raccordé à une première face 21 de la paroi supérieure 20. Chaque cavité de réception 10 comporte une paroi de réception 13 qui s'étend depuis le bord supérieur 12 et fait saillie sur une deuxième face 22 de la paroi supérieure 20, opposée à la première face 21 et visible sur la figure 3.

En se référant à la figure 3, la paroi de réception 13 comporte une face intérieure 13a qui est en contact avec les aliments à cuire pendant la cuisson, et une face extérieure 13b qui est opposée à la face intérieure 13a et est exposée à un moyen de chauffe (non illustré). A titre d'exemple, le moyen de chauffe est la résistance du four qui émet de la chaleur pendant la cuisson.

Le moule 1 est préférentiellement réalisé en matériau silicone qui est flexible, résistant à la température de cuisson élevée, antiadhérent et facile à nettoyer.

Tel que représenté sur la figure 1, le moule 1 comporte une bordure 30 rigide délimitant la paroi supérieure 20. Le moule 1 comporte deux poignées 40 agencées de manière opposée. Les poignées 40 sont issues de la bordure 30 et s'étendent à l'extérieur du moule 1.

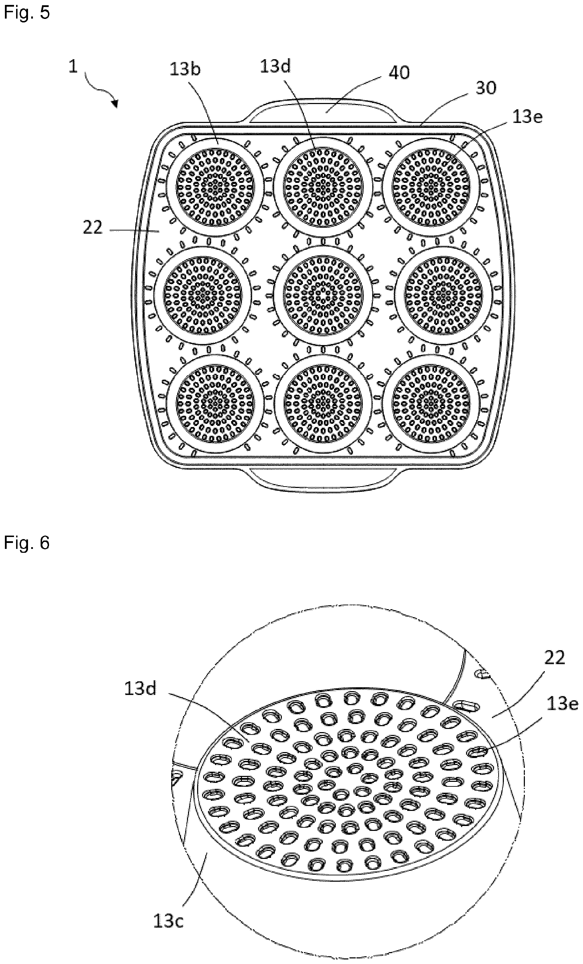

Telle que représentée sur la figure 3, la paroi de réception 13 comporte une paroi latérale 13c s'étendant depuis le bord supérieur 12 vers une paroi de fond 13d. La paroi latérale 13c et la paroi de fond 13d constituent un espace de réception donnant leurs formes aux aliments pendant la cuisson. Conformément à la figure 4, la paroi de réception 13 présente une épaisseur E sensiblement constante. La paroi de réception 13 comporte une pluralité de zones 13e réparties sur la face extérieure 13b au niveau de la paroi de fond 13d. La pluralité de zones 13e présente chacune une épaisseur Er inférieure à l'épaisseur E et une surface Sr, l'épaisseur Er étant sensiblement constante sur la surface Sr. Selon le mode particulier de réalisation de l'invention illustré à la figure 5, toutes les zones 13e présentent la même épaisseurs Er.

Le rapport de surface entre la surface totale de la ou des zones 13e et la surface de la face extérieure de la paroi de fond 13d est compris de 0.1 à 0.8, de préférence de 0.3 à 0.7. Le rapport d'épaisseur entre l'épaisseur Er et l'épaisseur E est compris de 0.3 à 0.8, de préférence de 0.5 à 0.8.

Telle que visible sur les figures 5 et 6, la paroi de fond 13d présente une forme ronde. Les zones 13e sont réparties sur la paroi de fond 13d et s'étendent de manière régulière depuis le centre de la paroi de fond 13d vers l'extrémité de la paroi de fond 13d. Les zones 13e présentent toutes une forme oblongue. La taille des zones 13e s'agrandit progressivement depuis le centre de la paroi de fond 13d vers l'extrémité de la paroi de fond 13d. Un tel agencement des zones 13e sur la paroi de fond 13d permet un transfert de chaleur régulier et uniforme sur toute la surface de la paroi de fond 13d.

La cuisson de pâtisseries dans le moule 1 selon l'invention va maintenant être décrite. Tout d'abord, l'utilisateur mélange les ingrédients selon une recette de pâtisseries dans un ustensile de cuisine pour préparer les aliments à cuire. Les aliments à cuire se présentent sous une forme liquide plus ou moins visqueuse. Il s'agit généralement d'une pâte crue. L'utilisateur verse progressivement les aliments à cuire dans les cavités de réception 10 du moule 1 via les ouvertures 11. Ensuite, l'utilisateur allume le four et la résistance du four est commandée pour atteindre une température de consigne à l'intérieur du four. L'utilisateur place le moule 1 contenant les aliments à cuire à l'intérieur du four sur une grille lorsque la température de consigne est atteinte. Ainsi, les aliments dans le moule 1 sont cuits à la température de consigne pendant une durée de consigne selon la recette de pâtisseries.

Pendant la cuisson au four, la résistance du four envoie une quantité de chaleur vers le moule 1 pour faire cuire les aliments. Le four dispose généralement d'un ventilateur pour réaliser un transfert thermique par convection forcée afin que la chaleur soit uniformément répartie dans le four. Les aliments se solidifient au fur et à mesure de la cuisson jusqu'à obtenir petit à petit les pâtisseries souhaitées avec un bon caractère croustillant.

La présence des zones 13e situées sur la face extérieure 13b au niveau de la paroi de fond 13d de la paroi de réception 13 favorise durant la cuisson le transfert thermique par conduction depuis l'extérieur de la cavité de réception 10 vers l'intérieur de la cavité de réception 10, grâce à la diminution d'épaisseur de la paroi de réception 13 au niveau de la zone 13e, sans modifier la forme finale des aliments après cuisson définie par la cavité de réception 10 du moule 1.

Le moule 1 selon l'invention présente l'avantage d'obtenir un bon caractère croustillant sur une face inférieure des aliments qui est en contact avec la paroi de fond 13d pendant la cuisson, sans la nécessité d'ajuster le temps et/ou la température de cuisson, et tout en gardant un coeur moelleux aux aliments après cuisson.

Le bon caractère croustillant d'une partie extérieure des aliments est mesuré à l'aide d'un texturomètre ou pénétromètre qui définit l'effort nécessaire à une pointe perforante pour pénétrer la partie extérieure des aliments, si celle-ci est croustillante, l'effort de pénétration nécessaire pour la traverser sera supérieur à celui nécessaire pour pénétrer l'intérieur des aliments.

Le moule 1 selon l'invention présente également l'avantage de permettre la cuisson des aliments contenus dans la cavité de réception de manière plus homogène.

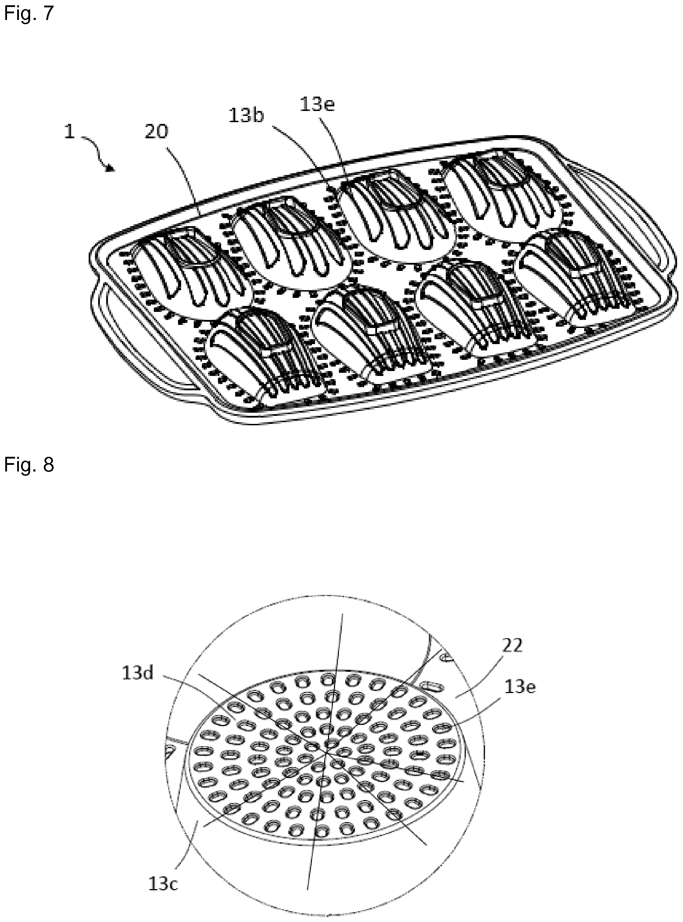

La figure 7 illustre un deuxième mode particulier de réalisation de l'invention dans lequel le moule 1 souple comporte huit cavités de réception destinées à réaliser des madeleines. Le moule 1 comporte plusieurs zones 13e sur la face extérieure 13b de la paroi de réception 13.

Bien entendu, l'invention n'est nullement limitée aux modes de réalisation précédemment décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation de l'invention non représentée, les zones situées sur la face extérieure de la paroi de réception présentent une forme et/ou une épaisseur Er différentes.

Ainsi, dans une variante de réalisation de l'invention non représentée, les zones sont également présentes sur la face extérieure au niveau de la paroi latérale, afin d'améliorer le caractère croustillant au niveau d'une surface latérale extérieure des aliments après cuisson.

## Revendications

1. Moule (1) destiné à la cuisson d'aliments, notamment à la cuisson de pâtisserie, comportant au moins une cavité (10) de réception d'aliments à cuire, cette cavité (10) comportant :
- un bord supérieur (12) raccordé à une paroi supérieure (20) du moule (1) ; et
- une paroi de réception (13) d'aliments à cuire qui s'étend depuis le bord supérieur (12), comportant
une face intérieure (13a) ;
une face extérieure (13b) ;
une paroi latérale (13c) ;
une paroi de fond (13d) présentant une épaisseur (E) constante ;
plusieurs zones (13e) réparties sur la face extérieure (13b) au niveau de la paroi de fond (13d) présentant une épaisseur (Er) inférieure à l'épaisseur (E) et une surface (Sr), l'épaisseur (Er) étant sensiblement constante sur la surface (Sr) ;
**caractérisé en ce que** la taille des zones (13e) augmente progressivement depuis le centre de la paroi de fond (13d) vers l'extrémité de la paroi de fond (13d).

2. Moule (1) selon la revendication 1 **caractérisé en ce que** les zones (13e) sont disposées en étoile sur la paroi de fond, les axes longitudinaux de ces zones (13e) formant les rayons d'une étoile.

3. Moule (1) selon l'une quelconque des revendications précédentes, **caractérisé en ce que** la paroi de réception (13) comportant la face intérieure (13a) est en contact avec les aliments à cuire et la face extérieure (13b) opposée à la face intérieure (13a) est exposée à un moyen de chauffe.

4. Moule (1) selon l'une quelconque des revendications précédentes, **caractérisé en ce que** le rapport entre la surface totale des zones (13e) et la surface de la face extérieure (13b) est compris de 0.1 à 0.9, de préférence de 0.3 à 0.8.

5. Moule (1) selon l'une quelconque des revendications précédentes, **caractérisé en ce que** le rapport entre la surface totale de la ou des zones (13e) et la surface de la face extérieure de la paroi de fond (13d) est compris de 0.1 à 0.8, de préférence de 0.3 à 0.7.

6. Moule (1) selon l'une quelconque des revendications précédentes, **caractérisé en ce que** la paroi de réception (13) comporte une pluralité de zones (13e) réparties de manière régulière sur la face extérieure (13b).

7. Moule (1) selon l'une quelconque des revendications précédentes, **caractérisé en ce que** les zones (13e) présentent la même forme et la même épaisseur (Er).

8. Moule (1) selon l'une quelconque des revendications précédentes, **caractérisé en ce que**, le rapport entre l'épaisseur (Er) et l'épaisseur (E) est compris de 0.3 à 0.8, de préférence de 0.5 à 0.8.

9. Moule (1) selon l'une quelconque des revendications précédentes, **caractérisé en ce que**, les zones (13e) sont agencées de manière concentrique en partant du centre géométrique de la paroi de fond (13d).
